# EUROPEAN PATENT APPLICATION

(11) **EP 2 712 214 A1**
(43) Date of publication of application: **26.03.2014**
(21) Application number: 12857632.9
(22) Date of filing: 12.12.2012
(51) Int. Cl.: H04W 4/02

(54) **METHOD FOR IMPLEMENTING POSITIONING SERVICE OF MOBILE DEVICE AND WIRELESS ACCESS DEVICE**

(30) Priority: 13.12.2011 CN 201110414973
(71) Applicant: Huawei Device Co., Ltd., Shenzhen, Guangdong 518129 (CN)
(72) Inventor: CHEN, Guoqiao, Shenzhen Guangdong 518129 (CN)
(74) Representative: Goddar, Heinz J.
(86) International application number: PCT/CN2012/086458
(87) International publication number: WO 2013/086984

(57) **Abstract**

The present invention pertains to the field of mobile device positioning technologies, and discloses a method and a wireless access device for implementing a positioning service for a mobile device. The method includes: acquiring, through a wireless communication connection, a positioning request sent by a mobile device; acquiring its own location information; acquiring positioning service information of the mobile device according to its own location information and the positioning request; and returning the positioning service information to the mobile device through the wireless communication connection, so that the mobile device receives and presents the positioning service information. The technical solutions can implement a positioning service for the mobile device without modifying software of the mobile device.

## Description

### CROSS-REFERENCE TO RELATED APPLICATION

This application claims priority to Chinese Patent Application No. 201110414973.6, filed with the Chinese Patent Office on December 13, 2011, which is incorporated herein by reference in its entirety.

### TECHNICAL FIELD

The present invention relates to the field of mobile device positioning technologies, and in particular, to a method and a wireless access device for implementing a positioning service for a mobile device.

### BACKGROUND

Generally, a wireless access device is used together with a mobile device having a WiFi (Wireless Fidelity, wireless fidelity) capability such as a tablet computer (such as an IPad). A scenario where the wireless access device is used with the mobile device is specifically as follows: The mobile device accesses the wireless access device through a short-range wireless communication protocol (such as WiFi), and then accesses an operator network by using a wireless access function (for example, using a WCDMA (Wideband Code Division Multiple Access, wideband code division multiple access) module)) of the wireless access device to enjoy related services provided by an operator.

At present, many mobile devices (such as an iPad) do not have a GPS chip, but a wireless access device may have a built-in GPS chip. In this case, if a mobile device not having a GPS chip uses the positioning service (such as navigation) provided by the operator, the mobile device not having a GPS chip cannot provide a GPS function, and cannot implement positioning for the mobile device itself by using the built-in GPS chip in the wireless access device. Therefore, the positioning service cannot be used, and functions of the GPS chip in the wireless access device are also wasted to some extent.

In the prior art, the wireless access device has a built-in GPS chip, and it is ensured that the wireless access device can provide a Bluetooth connection or a USB connection; herein, the wireless access device uses the GPS chip as an external GPS module to provide a GPS positioning function. In this way, the mobile device can be connected through a USB interface or Bluetooth interface to the external GPS module provided by the wireless access device, and acquire location information of the mobile device by using the GPS chip in the external GPS module.

The existing wireless access device provides only a WIFI connection. Therefore, the prior art has at least the following disadvantages: (1) None of the existing software and hardware structures of the wireless access device can provide a self-positioning function for the mobile device by using the external GPS module via the WIFI connection. (2) When it is necessary to use the prior art to enable the mobile device to implement positioning by using the external GPS module of the wireless access device, software or hardware of the wireless access device needs to be modified. In addition, the prior art is not applicable to mobile devices such as tablet computers.

### SUMMARY

Embodiments of the present invention provide a method and a wireless access device for implementing a positioning service for a mobile device. The technical solutions are as follows:
A method for implementing a positioning service for a mobile device, where the mobile device has established a wireless communication connection with a wireless access device through a short-range wireless communication protocol, the method including:
   acquiring, by the wireless access device through the wireless communication connection, a positioning request sent by the mobile device;
   acquiring, by the wireless access device, location information of the wireless access device after acquiring the positioning request;
   acquiring, by the wireless access device, positioning service information of the mobile device according to the location information of the wireless access device and the positioning request; and
   sending, by the wireless access device, the positioning service information to the mobile device through the wireless communication connection, so that the mobile device receives and presents the positioning service information.

A wireless access device, where the wireless access device includes:
a wireless access module, configured to establish a wireless communication connection with a mobile device through a short-range wireless communication protocol through the wireless communication connection;
a first acquiring module, configured to acquire a positioning request sent by the mobile device;
a second acquiring module, configured to acquire location information of the wireless access device after the first acquiring module acquires the positioning request;
a third acquiring module, configured to acquire positioning service information of the mobile device according to the location information acquired by the second acquiring module and the positioning request acquired by the first acquiring module; and
a sending module, configured to send the positioning service information acquired by the third acquiring module to the mobile device through the wireless communication connection, so that the mobile device receives and presents the positioning service information.

The technical solutions can implement the positioning service for the mobile device without modifying software of the mobile device, which helps to carry out the positioning service on the mobile device and provide better services for people.

### BRIEF DESCRIPTION OF DRAWINGS

To illustrate the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a flowchart of a method for implementing a positioning service for a mobile device according to Embodiment 1 of the present invention;
FIG. 2 is an structural diagram of a network according to Embodiment 2 of the present invention;
FIG. 3 is a flowchart of a method for implementing a positioning service for a mobile device according to Embodiment 2 of the present invention;
FIG. 4 is a flowchart of a method for implementing a positioning service for a mobile device according to Embodiment 2 of the present invention;
FIG. 5 is a flowchart of a method for implementing a positioning service for a mobile device according to Embodiment 2 of the present invention;
FIG. 6 is a flowchart of a method for implementing a positioning service for a mobile device according to Embodiment 2 of the present invention; and
FIG. 7 shows a wireless access device according to Embodiment 3 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

### Embodiment 1

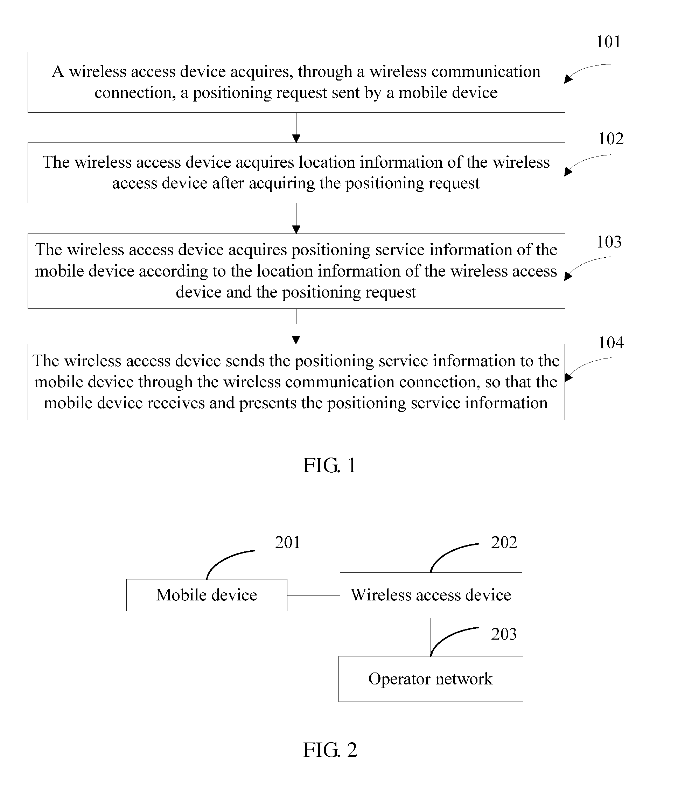

FIG. 1 shows a method for implementing a positioning service for a mobile device, where the mobile device has established a wireless communication connection with a wireless access device through a short-range wireless communication protocol, and the method includes:
Step 101: The wireless access device acquires, through the wireless communication connection, a positioning request sent by the mobile device.
Step 102: The wireless access device acquires location information of the wireless access device after acquiring the positioning request.
Step 103: The wireless access device acquires positioning service information of the mobile device according to the location information of the wireless access device and the positioning request.
Step 104: The wireless access device sends the positioning service information to the mobile device through the wireless communication connection, so that the mobile device receives and presents the positioning service information.

The short-range wireless communication protocol includes: a Bluetooth BlueTooth protocol, an infrared data association IrDA (Infrared Data Association) protocol, a wireless fidelity WiFi (Wireless Fidelity) protocol, an ultra-wideband UWB (Ultra-wideband) protocol, a ZigBee protocol, and so on.

The technical solution can implement the positioning service for the mobile device without modifying software of the mobile device, which helps to carry out the positioning service on the mobile device and provide better services for people.

### Embodiment 2

The network structure corresponding to the embodiment of the present invention, for which reference may be made to FIG. 2, includes a mobile device 201, a wireless access device 202, and an operator network 203. Specifically, the mobile device 201 establishes a wireless communication connection with the wireless access device 202 through a short-range wireless communication protocol, and accesses the operator network 203 by using the wireless access capability of WCDMA or HSDPA (High Speed Downlink Packet Access, high speed downlink packet access) of the wireless access device 202.

The wireless access device 202 has one or more functional chips. In the embodiment of the present invention, a baseband chip used by the wireless access device 202 has a satellite positioning module such as a GPS (Global Positioning System, global positioning system) module; meanwhile, the wireless access device 202 has a WiFi access capability, that is, the device may be used as a hotspot AP (Access Point) for WiFi access, and may have a processor such as an ARM 11 or Cortex A8.

In addition, the mobile device in the embodiment of the present invention may not have a satellite positioning module such as a GPS module, that is, the mobile device itself in the embodiment of the present invention cannot use the satellite positioning module for positioning.

In the embodiment of the present invention, when the mobile device needs to acquire location information of the mobile device, the mobile device acquires location information of the mobile device through the satellite positioning module, such as a GPS module, of the wireless access device; after acquiring the location information by positioning by using the satellite positioning module such as a GPS module, the wireless access device transfers the location information to the mobile device connected to the wireless access device; further, the mobile device may further carry out desired positioning services (such as a navigation service) according to the acquired location information.

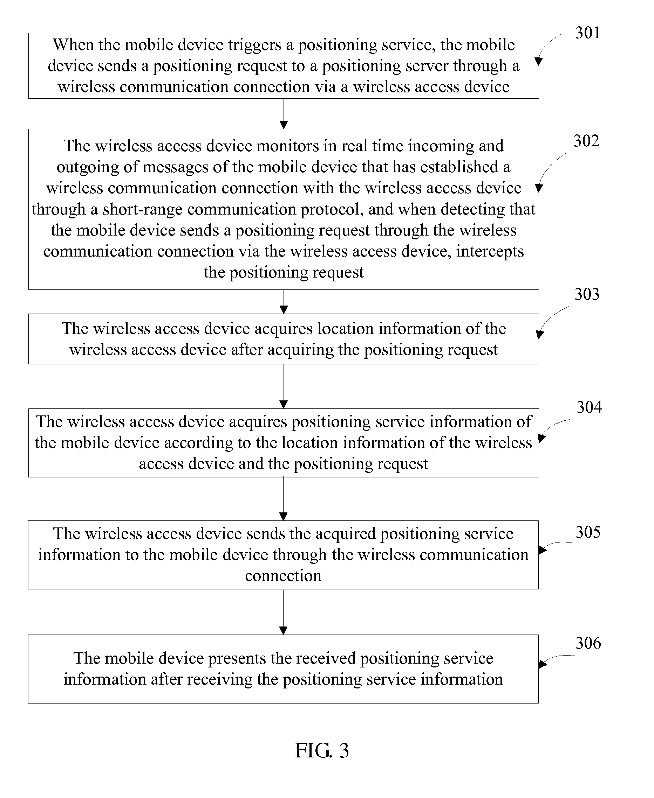

The following describes the above process with reference to specific embodiments. To trigger the positioning service by the mobile device, positioning service information of the mobile device needs to be acquired for carrying out the positioning service required by the mobile device. FIG. 3 shows a method for implementing a positioning service for a mobile device, where the method is specifically applicable to the network structure shown in FIG. 2, and specifically includes the following operation steps:
Step 301: When the mobile device triggers a positioning service, for example, when the mobile device triggers a navigation service, the mobile device sends a positioning request to a positioning server through a wireless communication connection via a wireless access device, where the positioning request may include a positioning service identifier and a URL (Uniform Resource Locator, uniform resource locator) of the positioning server and so on.

Specifically, the mobile device sends the positioning request to the positioning server through the wireless communication connection via the wireless access device by using an HTTP (Hyper Text Transfer Protocol, Hypertext Transfer Protocol) or RTSP (Real Time Streaming Protocol, Real-Time Streaming Protocol) protocol.

Step 302: The wireless access device monitors in real time incoming and outgoing of messages of the mobile device that has established a wireless communication connection with the wireless access device through a short-range communication protocol, and when detecting that the mobile device sends a positioning request through the wireless communication connection via the wireless access device, intercepts the positioning request.

As can be known from the description about step 301, the wireless access device intercepts the positioning request that is sent by the mobile device through the wireless communication connection by using the HTTP or RTSP protocol to the positioning server.

Step 303: The wireless access device acquires location information of the wireless access device after acquiring the positioning request.

Specifically, the wireless access device acquires location information of the wireless access device by positioning by using the satellite positioning system. In the specific implementation of the embodiment of the present invention, the wireless access device may invoke a satellite positioning module, such as a GPS module, of the wireless access device, and acquire the location information of the mobile device by satellite positioning by invoking the satellite positioning module, where the location information may be specifically GPS data.

In the embodiment of the present invention, the location information of the wireless access device acquired by the wireless access device may be used as location information of the mobile device. Because the mobile device and the wireless access device establish a connection through a short-range wireless communication protocol, the distance between the mobile device and the wireless access device is very short, usually not greater than 10 m. Therefore, in the embodiment of the present invention, the distance between the mobile device and the wireless access device is ignored, and the location information acquired by the wireless access device by satellite positioning by invoking the satellite positioning module such as the GPS module, may be used as the location information of the mobile device.

Step 304: The wireless access device acquires positioning service information of the mobile device according to the location information of the wireless access device and the positioning request, where the positioning service information includes location information, map information, or navigation information of the mobile device.

Specifically, this step includes:
Step 304-1: The wireless access device inserts the location information of the wireless access device into the positioning request to obtain a new positioning request, and sends the new positioning request to the positioning server according to the URL of the positioning server in the new positioning request, where the new positioning request includes a positioning service identifier, location information, and the URL of the positioning server.

Specifically, routing table information or deep packet inspection information may be set in the wireless access device, and the wireless access device sends, according to the routing table information or the deep packet inspection information, the new positioning request to the positioning server corresponding to the URL of the positioning server in the positioning request.

In the embodiment of the present invention, for the positioning server provided by a positioning service provider, such as Google, because the IP address of the positioning server is relatively fixed, the wireless access device may determine a route from the wireless access device to the positioning server by using a dynamic or static routing policy, and store the determined route into the routing table, where the dynamic or static routing policy pertains to the prior art and is not further described herein. In this way, the wireless access device may search the stored routing table information to obtain the route from the wireless access device to the positioning server, and send the new positioning request to the positioning server accurately along the obtained route.

For positioning servers provided by some minor operators, because the IP address of such a positioning server is not stationary relatively, the wireless access device may acquire the route from the wireless access device to the positioning server through a deep packet inspection technology before sending the positioning request to the positioning server, and afterward, send the new positioning request to the positioning server accurately along the route acquired by probing.

Step 304-2: After receiving the new positioning request, the positioning server acquires, according to the location information and positioning service identifier in the positioning request, map information related to the location information or navigation information related to a positioning service identified by the positioning service identifier.

Specifically, the positioning server performs map searching according to the location information in the positioning request to acquire map information related to the location information or navigation information related to the positioning service corresponding to the positioning service identifier in the positioning request.

Step 304-3: The positioning server sends the acquired map information or navigation information to the wireless access device.

Step 304-5: The wireless access device uses the previously acquired location information, map information, or navigation information as the positioning service information of the mobile device after receiving the map information or navigation information returned by the positioning server.

Step 305: The wireless access device sends the acquired positioning service information to the mobile device through the wireless communication connection, so that the mobile device receives and presents the positioning service information.

Specifically, the wireless access device sends the positioning service information to the mobile device through the wireless communication connection by using an HTTP or RTSP protocol.

Step 306: The mobile device presents the received positioning service information after receiving the positioning service information, for example, presents map information related to the location, or presents navigation information related to the positioning service.

The technical solution can implement the positioning service for the mobile device without modifying software of the mobile device, which helps to carry out the positioning service on the mobile device and provide better services for people.

Further, preferably, because the wireless access device has an AP function, the function of the positioning server may be set and run on the wireless access device; in addition, in the embodiment of the present invention, map software may be Porting (porting) in advance to the wireless access device, so that the wireless access device may run the ported map software.

In addition, a positioning service client may be built in both the mobile device and the wireless access device, and the address of the positioning server to which the positioning service client on the mobile device is directed may be set to the URL of the built-in positioning server in the wireless access device.

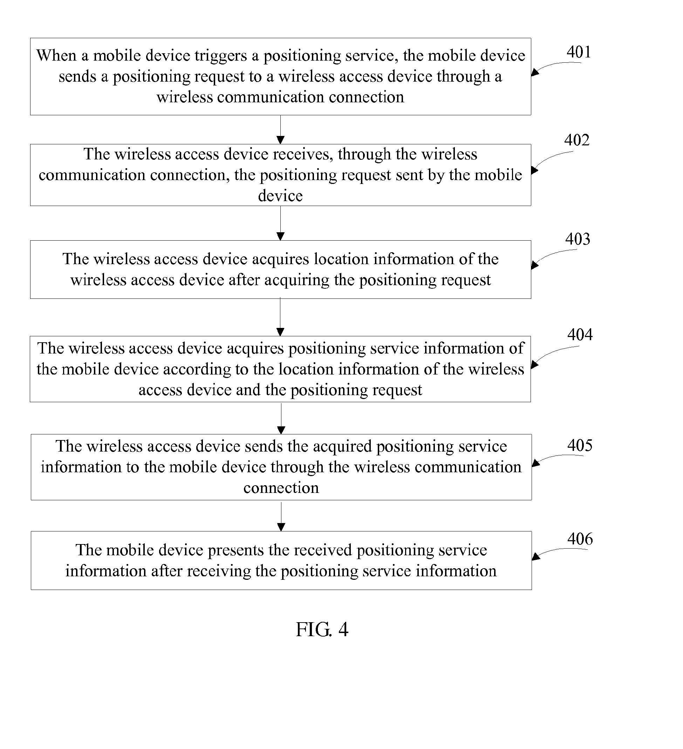

Based on the above description, the embodiment of the present invention provides another method for implementing a positioning service for a mobile device, so that the mobile device can acquire positioning service information of the mobile device when triggering the positioning service, so as to carry out the positioning service required by the mobile device. Referring to FIG. 4, the specific content is as follows:
Step 401: When the mobile device triggers a positioning service, for example, when the mobile device triggers a navigation service, the mobile device sends a positioning request to a wireless access device through a wireless communication connection; as can be known from the above description, the mobile device specifically sends a positioning request to a built-in positioning server in the wireless access device through a wireless communication connection.

Specifically, a built-in positioning service client of the mobile device sends, according to a URL of a positioning server preset by the positioning service client, a positioning request to the built-in positioning server in the wireless access device through a wireless communication connection by using an HTTP or RTSP protocol, where the positioning request may include a positioning service identifier.

Step 402: The wireless access device receives, through the wireless communication connection, the positioning request sent by the mobile device; as can be known from the description about step 401, the wireless access device specifically receives the positioning request sent by the mobile device through the wireless communication connection by using the HTTP or RTSP protocol to the built-in positioning server of the wireless access device.

Step 403: The wireless access device acquires location information of the wireless access device after receiving the positioning request.

Specifically, the wireless access device acquires location information of the wireless access device by positioning by using a satellite positioning system. In the specific implementation of the embodiment of the present invention, the wireless access device may invoke a satellite positioning module, such as a GPS module, of the wireless access device, and acquire the location information of the mobile device by satellite positioning by invoking the satellite positioning module, where the location information may be GPS data.

In the embodiment of the present invention, the location information of the wireless access device acquired by the wireless access device may be used as location information of the mobile device. Because the mobile device and the wireless access device establish a connection through a short-range wireless communication protocol, the distance between the mobile device and the wireless access device is very short, usually not greater than 10 m. Therefore, in the embodiment of the present invention, the distance between the mobile device and the wireless access device is ignored, and the location information acquired by the wireless access device by satellite positioning by invoking the satellite positioning module such as the GPS module, may be used as the location information of the mobile device.

Step 404: The wireless access device acquires positioning service information of the mobile device according to the location information of the wireless access device and the positioning request, where the positioning service information includes location information, map information, or navigation information of the mobile device.

Specifically, the built-in positioning server in the wireless access device performs map searching according to the acquired location information to acquire map information related to the location information or navigation information related to a positioning service identified by the positioning service identifier, and uses the acquired location information, map information, or navigation information as the positioning service information of the mobile device.

Herein, because the function of the positioning server is built in the wireless access device and map software is pre-installed in the wireless access device, the wireless access device can run the pre-installed map software according to the acquired location information and positioning service identifier, and perform map searching to acquire the map information related to the location or the navigation information related to the positioning service identified by the positioning service identifier.

Step 405: The wireless access device sends the acquired positioning service information to the mobile device through the wireless communication connection, so that the mobile device receives and presents the positioning service information.

Specifically, the wireless access device may send the positioning service information to the mobile device through the wireless communication connection by using an HTTP or RTSP protocol.

In the embodiment of the present invention, the wireless access device may send the positioning service information to the mobile device through the wireless communication connection by means of pictures, sound, or texts by using the HTTP or RTSP protocol.

Step 406: The mobile device presents the received positioning service information after receiving the positioning service information, for example, presents map information related to the location information, or presents navigation information related to the positioning service.

Herein, the mobile device may pre-install and run an enhanced streaming client. After receiving the positioning service information returned by the wireless access device, the mobile device runs the streaming client to present the map information or navigation information in the positioning service information to the user, thereby implementing the positioning service function of the mobile device.

The technical solution can implement the positioning service for the mobile device when the mobile device does not have a satellite positioning module such as a GPS module, which helps to carry out the positioning service on the mobile device and provide better services for people.

Further, to ensure compatibility between positioning capabilities of the wireless access device and the mobile device accessing the wireless access device, a function for querying for the positioning capability of the wireless access device may be provided in a terminal application of the mobile device.

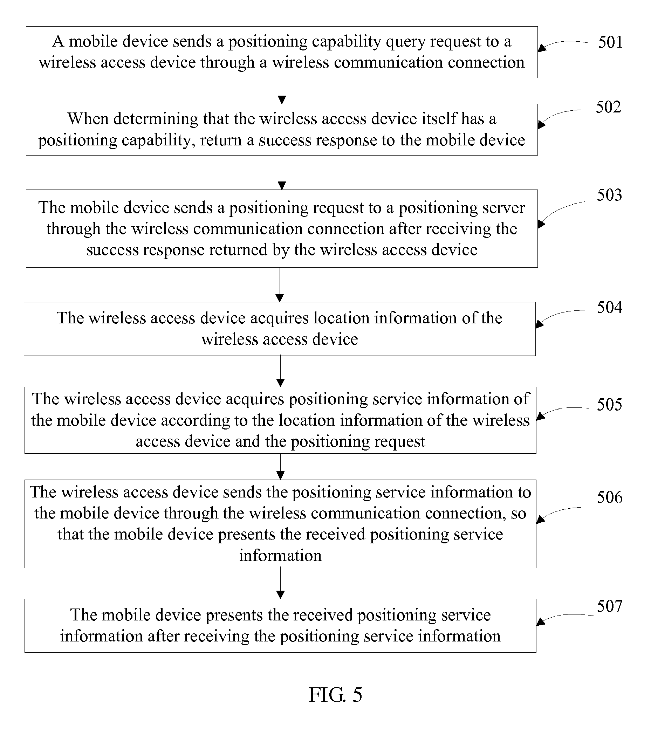

Based on the above description, the embodiment of the present invention provides another method for implementing a positioning service for a mobile device. To trigger the positioning service by the mobile device, positioning service information of the mobile device needs to be acquired for carrying out the positioning service required by the mobile device. Referring to FIG. 5, the specific content is as follows:
Step 501: The mobile device sends a positioning capability query request to a wireless access device through a wireless communication connection.

The mobile device may start a process of querying for the positioning capability of the wireless access device when triggering the positioning service, for example, when the mobile device triggers a navigation service, and send a positioning capability query request to the wireless access device through the wireless communication connection.

Specifically, the mobile device initiates a positioning capability query request to a preset URL address of a wireless access device, for example, initiates a positioning capability query request to a wireless access device whose URL is 192.168.1.1/capability.

In addition, in the specific implementation, the mobile device may start the process of querying for the positioning capability of the wireless access device when accessing the wireless access device through WiFi, and transmit the positioning capability query request to the accessed wireless access device through the WiFi protocol.

Step 502: After receiving the positioning capability query request through the wireless communication connection, the wireless access device detects whether the wireless access device itself has a positioning capability.

When determining that the wireless access device itself does not have a positioning capability, the wireless access device returns a failure response to the mobile device through the wireless communication connection. The positioning service requesting is terminated after the mobile device receives the failure response.

When determining that the wireless access device itself has a positioning capability, the wireless access device returns a success response to the mobile device through the wireless communication connection, and then step 503 is executed.

Step 503: The mobile device sends a positioning request to a positioning server through a wireless communication connection after receiving the success response returned by the wireless access device.

Specifically, the mobile device sends a positioning request to the positioning server through the wireless communication connection by using an HTTP or RTSP protocol, where the positioning request may include information such as a positioning service identifier and a URL of the positioning server.

Step 504: The wireless access device receives, through the wireless communication connection, the positioning request sent by the mobile device, and acquires location information of the wireless access device after receiving the positioning request.

Specifically, the wireless access device acquires location information of the wireless access device by positioning by using a satellite positioning system. In the specific implementation of the embodiment of the present invention, the wireless access device may invoke a satellite positioning module such as a GPS module, and acquire the location information of the mobile device by satellite positioning by invoking the satellite positioning module, where the location information may be specifically GPS data.

In the embodiment of the present invention, the location information of the wireless access device acquired by the wireless access device may be used as location information of the mobile device. Because the mobile device accesses the wireless access device through WiFi, the distance between the mobile device and the wireless access device is very short, usually not greater than 10 m. Therefore, in the embodiment of the present invention, the distance between the mobile device and the wireless access device is ignored, and the location information acquired by the wireless access device by satellite positioning by invoking the satellite positioning module such as the GPS module, may be used as the location information of the mobile device.

Step 505: The wireless access device acquires positioning service information of the mobile device according to the location information of the wireless access device and the positioning request, where the positioning service information includes location information, map information, or navigation information of the mobile device.

Specifically, when the positioning server is independent of the wireless access device, the wireless access device inserts the location information into the positioning request to obtain a new positioning request, and sends the new positioning request to the positioning server, so that the positioning server acquires, according to the location information and positioning service identifier in the received positioning request, map information related to the location information or navigation information related to a positioning service identified by the positioning service identifier; the wireless access device receives the map information or navigation information returned by the positioning server, and uses the acquired location information, map information, or navigation information as the positioning service information of the mobile device.

When the positioning server is integrated in the wireless access device, the built-in positioning server in the wireless access device acquires, according to the acquired location information and the positioning service identifier in the received positioning request, map information related to the location information or navigation information related to the positioning service identified by the positioning service identifier, and uses the acquired location information, map information, or navigation information as the positioning service information of the mobile device.

Step 506: The wireless access device sends the positioning service information to the mobile device through the wireless communication connection, so that the mobile device presents the received positioning service information.

In the embodiment of the present invention, the wireless access device may send the positioning service information to the mobile device through the wireless communication connection by using a Hypertext Transfer Protocol or a Real-Time Streaming Protocol; or
the wireless access device sends the positioning service information to the mobile device through the wireless communication connection by using a virtual serial port, a broadcast mode, or a Transmission Control Protocol/Internet Protocol port.

In the embodiment of the present invention, the location information of the mobile device acquired by the wireless access device by positioning may be satellite positioning information, for example, GPS data, and the standard data format of the GPS data is an NMEA (National Marine Electronics Association, National Marine Electronics Association, data transmission standard industry association) format. The universal interface is an NEMA port. The NEMA port is a universal serial port, and almost all navigation software can identify the NEMA port. The NMEA port is only a data output port and does not accept any input instruction.

Based on the above description, the transmission mode of the virtual serial port is specifically as follows:
After receiving the positioning request based on the HTTP or RTSP protocol, the wireless access device sends a positioning command to the satellite positioning module such as a GPS module through an AT interface, a positioning result obtained by the satellite positioning module such as the GPS module may be output through the NEMA port, and GPS data in the NEMA format is acquired; and afterward, NMEA data encapsulated by HTTP is sent to the mobile device.

The terminal device pre-installs virtual software of the serial port. In the embodiment of the present invention, the mobile device virtualizes the satellite positioning module, such as a GPS module, of the wireless access device into a serial port device, where the serial port device provides an internal virtual serial port and is connected to the wireless access device externally through WIFI; the mobile device sends an HTTP positioning request to the wireless access device through WIFI when requiring positioning, and sends data to the positioning software through the virtual serial port after receiving the NMEA data.

The broadcast mode or the Transmission Control Protocol TCP/Internet Protocol IP port transmission mode is as follows:
In the embodiment of the present invention, MIFI may be used as an AP, and has an ARM 11 (Advanced RISC Machines, advanced reduced instruction set computer, where the full spelling of RISC is Reduced Instruction Set Computer) or Cortex A8 processor and so on.

Then, a Socket Server is developed at the ARM11 side; when positioning software is run, two options are provided for a user. The user may select a universal NEMA port or select a socket port; the opened socket port is connected to the Socket Server.

When the mobile device sends a positioning request to the wireless access device, the Socket Server forwards the positioning request to an ARM9 by using an AT command; the ARM9 sends the NMEA data to the Socket Server by using an AT command; the Socket Server then forwards the NMEA data to a sokect client. The satellite positioning module such as a GPS module can acquire NEMA data; and the wireless access device sends NEMA data encapsulated by HTTP or RTSP to the mobile device.

The broadcast transmission mode is as follows:
This mode is basically similar to the TCP/IP port transmission mode, and the difference is that: The broadcast mode may use UPnP (Universal Plug and Play, Plug and Play) or other application layer protocols to transmit NMEA data in a broadcast domain from the wireless access device side to the mobile device side.

Step 507: The mobile device presents the received positioning service information after receiving the positioning service information, for example, presents map information related to the location of the mobile device, or presents navigation information related to the positioning service.

Herein, the mobile device may pre-install and run an enhanced streaming client. After receiving the positioning service information returned by the MIFI, the mobile device runs the streaming client to present the map information or navigation information and so on in the positioning service information to the user, thereby implementing the positioning service function of the mobile device.

The technical solution can implement the positioning service for the mobile device when the mobile device does not have a positioning capability, which helps to carry out the positioning service on the mobile device and provide better services for people.

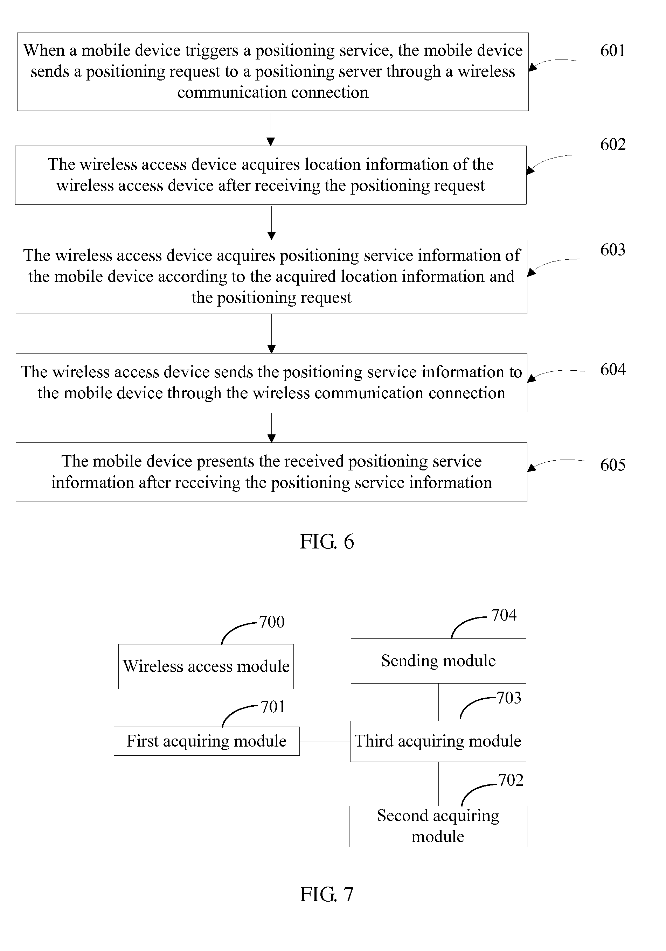

The above technical solution shows how the mobile device is enabled to use the GPS function of the wireless access device when the mobile device does not have a satellite positioning module such as a GPS module but the wireless access device has a satellite positioning module such as a GPS module, so that when the mobile device needs to acquire location information for triggering the positioning service, the mobile device can implement positioning of the mobile device and the positioning service through the satellite positioning module provided by the wireless access device. The following embodiment shows how to implement the positioning service on the mobile device when the wireless access device does not use the GPS function of the wireless access device. FIG. 6 shows another method for implementing a positioning service for a mobile device according to an embodiment of the present invention, which is specifically as follows:

Step 601: When the mobile device triggers a positioning service, for example, when the mobile device triggers a navigation service, the mobile device sends a positioning request to a positioning server through a wireless communication connection.

Specifically, the mobile device sends a positioning request to the positioning server through the wireless communication connection by using an HTTP or RTSP protocol, where the positioning request may include information such as a positioning service identifier and a URL of the positioning server.

Step 602: A wireless access device receives the positioning request through the wireless communication connection, and acquires location information of the wireless access device after receiving the positioning request.

Specifically, the wireless access device acquires location information of the wireless access device by positioning by using an IP address of the wireless access device, or the wireless access device acquires location information of the wireless access device by positioning by using a cell identifier of a cell accessed by the wireless access device, where the location information acquired by the wireless access device is specifically an IP address of the mobile device or a Cell ID (cell ID) of a cell accessed by the mobile device.

In the embodiment of the present invention, the location information of the wireless access device acquired by the wireless access device may be used as location information of the mobile device. Because the mobile device accesses the wireless access device through WiFi, the distance between the mobile device and the wireless access device is very short, usually not greater than 10 m. Therefore, in the embodiment of the present invention, the distance between the mobile device and the wireless access device is ignored, and the location information acquired by the wireless access device by satellite positioning by invoking a satellite positioning module such as a GPS module, may be used as the location information of the mobile device.

The principle of acquiring, by the wireless access device, location information of the wireless access device by positioning by using an IP address of the wireless access device is as follows:
the wireless access device reports the IP address of the wireless access device to a Transmission Control Protocol TCP/Internet Protocol IP positioning platform;
the TCP/IP positioning platform searches a correspondence relationship between the IP address and the location information to obtain location information corresponding to the IP address of the wireless access device according to the IP address of the wireless access device; and
the TCP/IP positioning platform returns the obtained location information of the wireless access device to the wireless access device.

The acquiring, by the wireless access device, location information of the wireless access device by positioning by using a cell identifier of a cell accessed by the wireless access device includes:
acquiring, by the wireless access device, a cell identifier of a cell accessed by the wireless access device, which is specifically as follows: after the wireless access device accesses an operator network by using the wireless access capability of WCDMA or HSDPA, a base station of the cell accessed by the wireless access device at the operator network side returns the cell identifier of the cell accessed by the wireless access device to the wireless access device;
reporting, by the wireless access device, the cell identifier of the cell accessed by the wireless access device to a location searching system at the operator network side;
searching, by the location searching system according to the cell identifier of the cell accessed by the wireless access device, a cell information database to obtain center coordinates of a base station corresponding to the cell identifier of the cell accessed by the wireless access device, where the obtained center coordinates are location information of the wireless access device in the cell identified by the cell identifier, and the cell information database includes a correspondence relationship between the cell identifier and the center coordinates of the base station; and
returning, by the location searching system, the obtained location information of the wireless access device to the wireless access device.

Step 603: The wireless access device acquires positioning service information of the mobile device according to the acquired location information and the positioning request, where the positioning service information includes location information, map information, or navigation information of the mobile device.

Specifically, when the positioning server is independent of the wireless access device, the wireless access device inserts the location information into the positioning request to obtain a new positioning request, and sends the new positioning request to the positioning server, so that the positioning server acquires, according to the location information and positioning service identifier in the received positioning request, map information related to the location information or navigation information related to a positioning service identified by the positioning service identifier; the wireless access device receives the map information or navigation information returned by the positioning server, and uses the acquired location information, map information, or navigation information as the positioning service information of the mobile device.

When the positioning server is integrated in the wireless access device, the built-in positioning server in the wireless access device acquires, according to the acquired location information and the positioning service identifier in the positioning request, map information related to the location information or navigation information related to the positioning service identified by the positioning service identifier, and uses the acquired location information, map information, or navigation information as the positioning service information of the mobile device.

Step 604: The wireless access device sends the positioning service information to the mobile device through the wireless communication connection, so that the mobile device presents the received positioning service information.

In the embodiment of the present invention, the wireless access device may send the positioning service information to the mobile device through the wireless communication connection by using a Hypertext Transfer Protocol or a Real-Time Streaming Protocol; or
the wireless access device sends the positioning service information to the mobile device through the wireless communication connection by using a virtual serial port, a broadcast mode, or a Transmission Control Protocol/Internet Protocol port.

Step 605: The mobile device presents the received positioning service information after receiving the positioning service information, for example, presents map information related to the location of the mobile device, or presents navigation information related to the positioning service.

Herein, the mobile device may pre-install and run an enhanced streaming client. After receiving the positioning service information returned by the wireless access device, the mobile device runs the streaming client to present the map information or navigation information and so on in the positioning service information to the user, thereby implementing the positioning service function of the mobile device.

In addition, it should be noted that before the acquiring the positioning request sent by the mobile device, the method may further include:
receiving a positioning capability query request sent by the mobile device, and when determining that the wireless access device has a positioning capability, returning a success response to the mobile device.

The technical solution can implement the positioning service for the mobile device without modifying software of the mobile device, which helps to carry out the positioning service on the mobile device and provide better services for people.

### Embodiment 3

FIG. 7 shows a portable bandwidth wireless apparatus, where the apparatus is specifically the same as the wireless access device in Method Embodiment 2 and includes: a wireless access module 700, a first acquiring module 701, a second acquiring module 702, a third acquiring module 703, and a sending module 704, where:
the wireless access module 700 is configured to establish a wireless communication connection with a mobile device through a short-range wireless communication protocol;
the first acquiring module 701 is configured to acquire, through the wireless communication connection, a positioning request sent by the mobile device;
the second acquiring module 702 is configured to acquire location information of the wireless access device after the first acquiring module 701 acquires the positioning request;
the third acquiring module 703 is configured to acquire positioning service information of the mobile device according to the location information acquired by the second acquiring module 702 and the positioning request acquired by the first acquiring module 704, where the positioning service information includes location information, map information, or navigation information of the mobile device; and
the sending module 704 is configured to return the positioning service information acquired by the third acquiring module 704 to the mobile device through the wireless communication connection, so that the mobile device receives and presents the positioning service information.

In the embodiment of the present invention, the wireless access device further includes: a querying module, configured to receive a positioning capability query request sent by the mobile device, and when it is determined that the wireless access device has a positioning capability, return a success response to the mobile device through the wireless communication connection.

Specifically, the second acquiring module 702 includes:
a first acquiring unit, configured to acquire location information of the wireless access device through a satellite positioning system; or
a second acquiring unit, configured to acquire location information of the wireless access device by positioning by using an IP address of the wireless access device; or
a third acquiring unit, configured to acquire location information of the wireless access device by positioning by using a cell identifier of a cell accessed by the wireless access device.

In the embodiment of the present invention, the first acquiring module 701 is specifically configured to: when the positioning request includes a positioning service identifier and a uniform resource locator of a positioning server, intercept the positioning request sent by the mobile device through the wireless communication connection via the wireless access device to the positioning server; and
correspondingly, the third acquiring module 703 is specifically configured to: when the positioning request includes the positioning service identifier and the uniform resource locator of the positioning server, insert the acquired location information into the positioning request to obtain a new positioning request, and send the new positioning request to the positioning server according to the uniform resource locator of the positioning server, so that the positioning server acquires, according to the location information and the positioning service identifier, map information related to the location information or navigation information related to a positioning service identified by the positioning service identifier, and receive the map information or the navigation information returned by the positioning server, and use the acquired location information, map information, or navigation information as the positioning service information of the mobile device.

In the embodiment of the present invention, the first acquiring module 701 is specifically configured to: when the positioning request includes a positioning service identifier, receive the positioning request sent by the mobile device through the wireless communication connection to a built-in positioning server in the wireless access device; and
correspondingly, the third acquiring module 703 is specifically configured to: when the positioning request includes the positioning service identifier, acquire, according to the location information and the positioning service identifier, map information related to the location information or navigation information related to a positioning service identified by the positioning service identifier, and use the location information, map information, or navigation information of the mobile device as the positioning service information of the mobile device.

The sending module 704 includes:
a first sending unit, configured to send the positioning service information to the mobile device through the wireless communication connection by using a Hypertext Transfer Protocol or a Real-Time Streaming Protocol; or
a second sending unit, configured to send the positioning service information to the mobile device through the wireless communication connection by using a virtual serial port, a broadcast mode, or a Transmission Control Protocol/Internet Protocol port.

The technical solution can implement the positioning service for the mobile device without modifying software of the mobile device, which helps to carry out the positioning service on the mobile device and provide better services for people.

For the method and device embodiments of the present invention, reference may be made to each other. Because the whole procedure has been described in detail in the method embodiments, some details are omitted in the device embodiments. For details, reference may be made to the method embodiments.

A person of ordinary skill in the art may understand that all or a part of the steps of the foregoing embodiments may be implemented through hardware, or may be implemented by a program instructing relevant hardware. The program may be stored in a computer readable storage medium. The storage medium may be a read-only memory, a magnetic disk, or an optical disk.

The foregoing descriptions are merely exemplary embodiments of the present invention, but are not intended to limit the present invention. Any modification, equivalent replacement, or improvement made within the spirit and principle of the present invention shall fall within the protection scope of the present invention.

## Claims

1. A method for implementing a positioning service for a mobile device, wherein the mobile device has established a wireless communication connection with a wireless access device through a short-range wireless communication protocol, the method comprising:
acquiring, by the wireless access device through the wireless communication connection, a positioning request sent by the mobile device;
acquiring, by the wireless access device, location information of the wireless access device after acquiring the positioning request;
acquiring, by the wireless access device, positioning service information of the mobile device according to the location information of the wireless access device and the positioning request; and
sending, by the wireless access device, the positioning service information to the mobile device through the wireless communication connection, so that the mobile device receives and presents the positioning service information.

2. The method according to claim 1, wherein before the acquiring, by the wireless access device, a positioning request sent by the mobile device, the method further comprises:
receiving, by the wireless access device through the wireless communication connection, a positioning capability query request sent by the mobile device, and when determining that the wireless access device has a positioning capability, returning a success response to the mobile device through the wireless communication connection.

3. The method according to claim 1 or 2, wherein the acquiring, by the wireless access device, location information of the wireless access device comprises:
acquiring, by the wireless access device, location information of the wireless access device through a satellite positioning system; or
acquiring, by the wireless access device, location information of the wireless access device by positioning by using an IP address of the wireless access device; or
acquiring, by the wireless access device, location information of the wireless access device by positioning by using a cell identifier of a cell accessed by the wireless access device.

4. The method according to any one of claims 1 to 3, wherein: the positioning request comprises a positioning service identifier and a uniform resource locator of a positioning server, and the acquiring, by the wireless access device through the wireless communication connection, a positioning request sent by the mobile device specifically comprises:
intercepting, by the wireless access device, the positioning request sent by the mobile device through the wireless communication connection via the wireless access device to the positioning server; and
the acquiring, by the wireless access device, positioning service information of the mobile device according to the location information of the wireless access device and the positioning request specifically comprises:
inserting, by the wireless access device, the location information of the wireless access device into the positioning request to obtain a new positioning request, and sending the new positioning request to the positioning server according to the uniform resource locator of the positioning server, so that the positioning server acquires, according to the location information and the positioning service identifier, map information related to the location information or navigation information related to a positioning service identified by the positioning service identifier; and
receiving, by the wireless access device, the map information or the navigation information returned by the positioning server, and using the location information, the map information, or the navigation information as the positioning service information of the mobile device.

5. The method according to any one of claims 1 to 3, wherein: the positioning request comprises a positioning service identifier, and the acquiring, by the wireless access device through the wireless communication connection, a positioning request sent by the mobile device specifically comprises:
receiving, by the wireless access device, the positioning request sent by the mobile device through the wireless communication connection to a built-in positioning server in the wireless access device; and
the acquiring, by the wireless access device, positioning service information of the mobile device according to the location information of the wireless access device and the positioning request specifically comprises:
acquiring, by the built-in positioning server in the wireless access device according to the location information and the positioning service identifier, map information related to the location information or navigation information related to a positioning service identified by the positioning service identifier, and using the location information, the map information, or the navigation information as the positioning service information of the mobile device.

6. The method according to any one of claims 1 to 5, wherein the sending, by the wireless access device, the positioning service information to the mobile device through the wireless communication connection comprises:
sending, by the wireless access device, the positioning service information to the mobile device through the wireless communication connection by using a Hypertext Transfer Protocol or a Real-Time Streaming Protocol; or
sending, by the wireless access device, the positioning service information to the mobile device through the wireless communication connection by using a virtual serial port, a broadcast mode, or a Transmission Control Protocol/Internet Protocol port.

7. A wireless access device, wherein the wireless access device comprises:
a wireless access module, configured to establish a wireless communication connection with a mobile device through a short-range wireless communication protocol;
a first acquiring module, configured to acquire, through the wireless communication connection, a positioning request sent by the mobile device;
a second acquiring module, configured to acquire location information of the wireless access device after the first acquiring module acquires the positioning request;
a third acquiring module, configured to acquire positioning service information of the mobile device according to the location information acquired by the second acquiring module and the positioning request acquired by the first acquiring module; and
a sending module, configured to send the positioning service information acquired by the third acquiring module to the mobile device through the wireless communication connection, so that the mobile device receives and presents the positioning service information.

8. The wireless access device according to claim 7, wherein the wireless access device further comprises: a querying module, configured to receive, through the wireless communication connection, a positioning capability query request sent by the mobile device, and when it is determined that the wireless access device has a positioning capability, return a success response to the mobile device through the wireless communication connection.

9. The wireless access device according to claim 7 or 8, wherein the second acquiring module comprises:
a first acquiring unit, configured to acquire location information of the wireless access device through a satellite positioning system; or
a second acquiring unit, configured to acquire location information of the wireless access device by positioning by using an IP address of the wireless access device; or
a third acquiring unit, configured to acquire location information of the wireless access device by positioning by using a cell identifier of a cell accessed by the wireless access device.

10. The wireless access device according to any one of claims 7 to 9, wherein, the first acquiring module is specifically configured to: when the positioning request comprises a positioning service identifier and a uniform resource locator of a positioning server, intercept the positioning request sent by the mobile device through the wireless communication connection via the first device to the positioning server; and
the third acquiring module is specifically configured to: when the positioning request comprises the positioning service identifier and the uniform resource locator of the positioning server, insert the location information into the positioning request to obtain a new positioning request, and send the new positioning request to the positioning server according to the uniform resource locator of the positioning server, so that the positioning server acquires, according to the location information and the positioning service identifier, map information related to the location information or navigation information related to a positioning service identified by the positioning service identifier, and receive the map information or the navigation information returned by the positioning server, and use the location information, the map information, or the navigation information as the positioning service information of the mobile device.

11. The wireless access device according to any one of claims 7 to 9, wherein, the first acquiring module is specifically configured to: when the positioning request comprises a positioning service identifier, receive the positioning request sent by the mobile device through the wireless communication connection to a built-in positioning server in the wireless access device; and
the third acquiring module is specifically configured to: when the positioning request comprises the positioning service identifier, acquire, according to the location information and the positioning service identifier, map information related to the location information or navigation information related to a positioning service identified by the positioning service identifier, and use the location information, the map information, or the navigation information as the positioning service information of the mobile device.

12. The wireless access device according to any one of claims 7 to 11, wherein the sending module comprises:
a first sending unit, configured to send the positioning service information to the mobile device through the wireless communication connection by using a Hypertext Transfer Protocol or a Real-Time Streaming Protocol; or
a second sending unit, configured to send the positioning service information to the mobile device through the wireless communication connection by using a virtual serial port, a broadcast mode, or a Transmission Control Protocol/Internet Protocol port.
